# EUROPEAN PATENT APPLICATION

(11) **EP 4 789 859 A1**
(43) Date of publication of application: **12.08.2026**
(21) Application number: 24878398.7
(22) Date of filing: 18.04.2024
(51) Int. Cl.: B30B 3/04, H01M 10/04

(54) **BUMP PREPARATION DEVICE, BATTERY PRODUCTION SYSTEM AND WINDING METHOD**

(30) Priority: 18.10.2023 CN 202311349041
(71) Applicant: Contemporary Amperex Technology Co., Limited, Ningde, Fujian 352100 (CN)
(72) Inventor: LUO, Weijie, Ningde, Fujian 352100 (CN)
(74) Representative: Ziebig Hengelhaupt Intellectual Property Attorneys Patentanwaltskanzlei PartGmbB
(86) International application number: PCT/CN2024/088648
(87) International publication number: WO 2025/081744

(57) **Abstract**

A bump preparation device, comprising a bump preparation mechanism (100) and a compacting mechanism (200) which are sequentially arranged in a conveying direction (X) of a first material (300), wherein the bump preparation mechanism (100) is used for preparing overvoltage bumps (310) on the first material (300); the height (h) of each overvoltage bump is greater than the height of a preset bump, and the preset bump is a bump required by the first material (300); and the compacting mechanism (200) is used for applying a pressure to the overvoltage bumps (310) towards a main body of the first material (300), so that the thickness (a) of the first material reaches a preset value. The device can improve the thickness consistency of electrode sheets and reduce the risk of tab dislocation. Also provided are a battery production system and a winding method.

## Description

The present application claims priority to Chinese Patent Application No. 202311349041.7, filed with the China National Intellectual Property Administration on October 18, 2023 and entitled "BUMP PREPARATION DEVICE, BATTERY PRODUCTION SYSTEM, AND WINDING METHOD", which is incorporated by reference in its entirety.

### TECHNICAL FIELD

The present application pertains to the technical field of battery production equipment, and particularly relates to a bump preparation device, a battery production system, and a winding method.

### BACKGROUND

A wound electrode assembly generally includes a negative electrode sheet, a positive electrode sheet, and a separator arranged in a preset sequence. The thickness of the electrode sheet is generally greater than the thickness of the separator, and the electrode sheet is typically provided with tabs, with multiple tabs often provided on the same electrode sheet. However, in the current production of wound electrode assemblies, the problem of tab position misalignment is prone to occur.

### SUMMARY

The purpose of embodiments of the present application is to provide a bump preparation device, a battery production system, and a winding method, which aims to ameliorate the technical problem of prone misalignment of the tab positions in the wound electrode assembly.

### TECHNICAL SOLUTION

The technical solution adopted by embodiments of the present application is as follows:

According to a first aspect, an embodiment of the present application provides a bump preparation device, including a bump preparation mechanism and a compacting mechanism that are sequentially arranged along a conveying direction of a first material, where the bump preparation mechanism is configured to prepare overpressed bumps on the first material, a height of the overpressed bump is greater than a height of a preset bump, the preset bump is a bump required by the first material, and the compacting mechanism is configured to apply, to the overpressed bumps, pressure toward a main body portion of the first material, such that a thickness of the first material reaches a preset value.

This embodiment of the present application provides a bump preparation device, which is provided with a bump preparation mechanism and a compacting mechanism that are sequentially arranged along the conveying direction of the first material. This device changes the bump preparation process in the related art in which preset bumps are directly prepared by the bump preparation mechanism. Instead, a two-step process is adopted: overpressed bumps with a height greater than the height of the preset bump are first prepared on the first material, and then pressure is applied to the overpressed bumps by the compacting mechanism to reduce the height of the bumps on the first material, so that the thickness of the first material reaches the preset value. In this way, even if the first material has an uneven thickness before passing through the bump preparation device, different regions of the first material that has passed through the bump preparation device can have substantially the same thickness. This can reduce the risk of production of defective products such as tab misalignment to a certain extent, thereby improving the consistency of different electrode assemblies produced and the winding yield of the electrode assemblies to a certain extent. Meanwhile, the bump preparation device provided in embodiments of the present application has high compatibility with the incoming thickness of electrode sheets, allowing electrode sheets of different thicknesses to be used in a mixed manner. This can eliminate or reduce the labor and plant space required for electrode sheet grading and matching to a certain extent, thereby improving the winding efficiency to a certain extent.

In some embodiments, the bump preparation mechanism includes a first roller body and a second roller body that are spaced apart from each other, where a first gap for the first material to pass through is provided between the first roller body and the second roller body, and at least one of the first roller body and the second roller body is provided with a protruding portion. With this structure provided in this embodiment, the bump preparation mechanism is simple in structure and convenient for assembly and processing of the first material.

In some embodiments, one of the first roller body and the second roller body is provided with a protruding portion, and a surface of the other roller body is provided with an elastic layer in contact with the first material. With this structure provided in this embodiment, the bump preparation mechanism is simple in structure and convenient for assembly and processing of the first material.

In some embodiments, the first roller body and the second roller body are each provided with a protruding portion, and the protruding portion on the first roller body and the protruding portion on the second roller body are arranged in a staggered manner. This facilitates the passage of the first material through the first gap and the preparation of the overpressed bumps.

In some embodiments, the bump preparation mechanism further includes a first support, where one of the first roller body and the second roller body is fixedly mounted on the first support, the other roller body is movably mounted on the first support along a first direction, and the first direction is perpendicular to an axial direction of the fixedly mounted roller body. The solution provided in this embodiment enables a width of the first gap to be adjustable. The width of the first gap refers to a spacing between a rolling surface of the first roller body and a rolling surface of the second roller body. This makes the bump preparation mechanism applicable to bump preparation processes for first materials of different thicknesses, thereby broadening the application scope of the bump preparation mechanism to a certain extent.

In some embodiments, the bump preparation mechanism further includes a first moving support, where the first moving support is movably mounted on the first support along the first direction, and a movable roller body is fixedly mounted on the first moving support. Compared with directly mounting the movable roller body on the first support, the solution provided in this embodiment makes the position adjustment of the movable roller body more convenient to operate.

In some embodiments, the bump preparation mechanism further includes a first linear drive mechanism, where the first linear drive mechanism is mounted on the first support, and a drive end of the first linear drive mechanism is connected to the first moving support for driving the first moving support to move. The solution provided in this embodiment further improves the automation level of the bump preparation mechanism, making the adjustment of the width of the first gap more convenient and accurate.

In some embodiments, the compacting mechanism includes a third roller body and a fourth roller body that are spaced apart from each other, where a second gap for the first material to pass through is provided between the third roller body and the fourth roller body, and a width of the second gap is less than a thickness of the first material output by the bump preparation mechanism. With this structure provided in this embodiment, the compacting mechanism is simple in structure and convenient for assembly and processing of the first material.

In some embodiments, the compacting mechanism further includes a second support, where one of the third roller body and the fourth roller body is fixedly mounted on the second support, the other roller body is movably mounted on the second support along a second direction, and the second direction is perpendicular to an axial direction of the fixedly mounted roller body. The solution provided in this embodiment allows the width b of the second gap to be adjustable. This enables the compacting mechanism to be applicable to processing requirements of first materials of different thicknesses, thereby broadening the application scope of the compacting mechanism to a certain extent.

In some embodiments, the compacting mechanism further includes a second moving support, where the second moving support is movably mounted on the second support along the second direction, and the movable roller body is fixedly mounted on the second moving support. Compared with directly mounting the movable roller body on the second support, the solution provided in this embodiment makes the position adjustment of the movable roller body more convenient to operate.

In some embodiments, the compacting mechanism further includes a second linear drive mechanism, where the second linear drive mechanism is mounted on the second support, and a drive end of the second linear drive mechanism is connected to the second moving support for driving the second moving support to move. The solution provided in this embodiment further improves the automation level of the compacting mechanism, making the adjustment of the width of the first gap more convenient and accurate.

In some embodiments, the compacting mechanism further includes a fixing structure, where the fixing structure is configured to secure a position of the movable roller body after the movable roller body moves into place. The solution provided in this embodiment can secure the relative position of the movable roller body with respect to the second support and the fixedly mounted roller body after the movable roller body moves into place, thereby ensuring the processing operation of the compacting mechanism to proceed stably.

In some embodiments, the fixing structure includes a first support portion and a second support portion, where the first support portion is fixedly mounted on the second support and located on a side of the second moving support away from the second linear drive mechanism, and the first support portion is spaced apart from the second moving support with a third gap therebetween; and the second support portion is configured to: be mounted into the third gap after the movable roller body moves into place, and abut against the second moving support and the first support portion. With the structure provided in this embodiment, the fixing structure is simple in structure and convenient for preparation and installation.

In some embodiments, along a third direction, the third gap has a first end and a second end oppositely arranged, and a width of the third gap gradually decreases from the first end toward the second end; the second support portion is configured to be inserted into the third gap from the first end; and along the third direction, a cross-sectional area of the second support portion gradually increases from an insertion end toward the other end. The solution provided in this embodiment facilitates the installation of the second support portion and can improve the production efficiency to a certain extent.

In some embodiments, a surface of the second moving support opposite to the first support portion is a horizontally arranged flat surface, a surface of the first support portion opposite to the second moving support is an inclined surface, a surface that is of the second support portion and that is in contact with the second moving support is a horizontally arranged flat surface, and a surface in contact with the first support portion is an inclined surface. The solution provided in this embodiment enables the second support portion to be in surface contact with the first support portion and the second moving support, thereby providing a large friction force between the second support portion and the second moving support as well as the first support portion after installation, and further achieving stable support for the second moving support.

In some embodiments, the second support portion is a wedge block. With the solution provided in this embodiment, the structure of the second support portion is simple and stable, and convenient for preparation and operation.

In some embodiments, the compacting mechanism further includes an adjustment assembly, where the adjustment assembly is mounted on the second support, and a drive end of the adjustment assembly is connected to the second support portion for driving the second support portion to be inserted into the third gap. The arrangement of the adjustment assembly facilitates the insertion of the second support portion into the third gap and can improve the processing efficiency of the first material to a certain extent.

In some embodiments, the adjustment assembly includes a first adjustment portion and a second adjustment portion, where the first adjustment portion is fixedly mounted on the second support, the second adjustment portion is threadedly coupled to the first adjustment portion, and the second adjustment portion abuts against the second support portion. With the structure provided in this embodiment, the adjustment assembly is simple in structure and convenient for operation.

In some embodiments, the first adjustment portion includes a protrusion protruding from the second support, where a threaded hole is provided on the protrusion, and the second adjustment portion includes a bolt threadedly coupled to the threaded hole. With the solution provided in this embodiment, the first adjustment portion and the second adjustment portion are each simple in structure, and convenient for installation and operation.

According to a second aspect, an embodiment of the present application provides a battery production system, including the bump preparation device according to any one of the above embodiments. The battery production system provided in embodiments of the present application adds a set of bump preparation mechanism and compacting mechanism before winding equipment, such that different regions of the first material that has passed through the bump preparation device have substantially the same thickness. This can reduce the risk of production of defective products such as tab misalignment to a certain extent, thereby improving the consistency of different electrode assemblies produced and the winding yield of the electrode assemblies to a certain extent. Meanwhile, the battery production system provided in embodiments of the present application has high compatibility with the incoming thickness of electrode sheets, allowing electrode sheets of different thicknesses to be used in a mixed manner. This can eliminate or reduce the labor and plant space required for electrode sheet grading and matching to a certain extent, thereby improving the winding efficiency to a certain extent.

According to a third aspect, an embodiment of the present application provides a winding method, including: providing an electrode sheet and a separator; processing by the bump preparation device according to any one of the above embodiments; and winding to form. Through the winding method provided in embodiments of the present application, different regions of the first material produced can have substantially the same thickness. This can reduce the risk of production of defective products such as tab misalignment to a certain extent, thereby improving the consistency of different electrode assemblies produced and the winding yield of the electrode assemblies to a certain extent. Meanwhile, it features high compatibility with the incoming thickness of electrode sheets, allowing electrode sheets of different thicknesses to be used in a mixed manner. This can eliminate or reduce the labor and plant space required for electrode sheet grading and matching to a certain extent, thereby improving the winding efficiency to a certain extent.

The above description is merely an overview of the technical solution of the present application. In order to more clearly understand the technical means of the present application and to implement it in accordance with the content of the specification, and in order to make the above and other purposes, features, and advantages of the present application more obvious and easy to understand, the specific implementations of the present application are specifically exemplified below.

### BRIEF DESCRIPTION OF DRAWINGS

In order to more clearly illustrate the technical solutions in embodiments of the present application, the accompanying drawings to be used in the description of embodiments or example technical descriptions are briefly introduced below. Obviously, the accompanying drawings described below are only some embodiments of the present application. For those of ordinary skill in the art, other drawings can also be obtained based on these drawings without creative efforts.
FIG. 1 is a schematic diagram of a usage state of a bump preparation device according to some embodiments of the present application;
FIG. 2 is a schematic diagram of a usage state of a bump preparation device according to some other embodiments of the present application;
FIG. 3 is a schematic structural diagram of a first material in FIG. 2;
FIG. 4 is a schematic front structural view of a bump preparation mechanism according to some embodiments of the present application;
FIG. 5 is a schematic perspective structural view of a bump preparation mechanism according to some embodiments of the present application;
FIG. 6 is a schematic front structural view of a compacting mechanism according to some embodiments of the present application;
FIG. 7 is a schematic perspective structural view of a compacting mechanism according to some embodiments of the present application;
FIG. 8 is a schematic side structural view of a compacting mechanism according to some embodiments of the present application, in which a second support portion is not shown; and
FIG. 9 is a schematic flowchart of a winding method according to some embodiments of the present application.

The reference signs in the accompanying drawings of the specific embodiments are as follows:
100, bump preparation mechanism; 110, first roller body; 120, second roller body; 130, first gap; 140, protruding portion; 150, elastic layer; 160, first support; 170, first moving support; 180, first linear drive mechanism;
200, compacting mechanism; 210, third roller body; 220, fourth roller body; 230, second gap; 240, second support; 250, second moving support; 260, second linear drive mechanism; 270, fixing structure; 271, first support portion; 272, second support portion; 273, third gap; 274, first end; 275, second end; 280, adjustment assembly; 281, first adjustment portion; 282, second adjustment portion;
300, first material; 310, overpressed bump; 320, first surface;
X, conveying direction of the first material; h, height of the overpressed bump; a, thickness of the first material; b, width of the second gap; Y1, first direction; Y2, second direction; Z, third direction; and N, normal direction.

### DESCRIPTION OF EMBODIMENTS

Embodiments of the technical solution of the present application are described in detail below with reference to the accompanying drawings. The following embodiments are only used to more clearly illustrate the technical solution of the present application and are therefore used as examples only, and cannot be used to limit the protection scope of the present application.

Unless otherwise defined, all technical and scientific terms used herein have the same meaning as commonly understood by those of ordinary skill in the art to which the present application pertains; the terms used herein are only for the purpose of describing specific embodiments and are not intended to limit the present application; the terms "including" and "having" and any variations thereof in the specification and claims of the present application and the above description of the drawings are intended to cover non-exclusive inclusions.

In the description of embodiments of the present application, technical terms such as "first" and "second" are only used to distinguish different objects and cannot be understood as indicating or implying relative importance or implicitly indicating the number, specific order, or primary and secondary relationship of the indicated technical features. In the description of embodiments of the present application, the meaning of "multiple" is two or more, unless otherwise clearly and specifically limited.

As used herein, "embodiment" means that a particular feature, structure, or characteristic described in connection with the embodiment can be included in at least one embodiment of the present application. The appearance of the phrase in various places in the specification does not necessarily refer to the same embodiment, nor is it an independent or alternative embodiment that is mutually exclusive with other embodiments. Those of ordinary skill in the art explicitly and implicitly understand that embodiments described herein can be combined with other embodiments.

In the description of embodiments of the present application, the term "and/or" is merely an association describing associated objects, indicating that three relationships can exist, for example, and/or B may indicate: exists alone, both and B exist, and B exists alone. In addition, the character "/" in this text generally indicates that the preceding and following associated objects are in an "or" relationship.

In the description of embodiments of the present application, the technical term " multiple " refers to two or more (including two), similarly, "multiple groups" refers to two or more groups (including two groups), and "multiple sheets" refers to two or more sheets (including two sheets).

In the description of embodiments of the present application, the orientation or positional relationship indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" is based on the orientation or positional relationship shown in the drawings, and is only for convenience of describing embodiments of the present application and simplifying the description, rather than indicating or implying that the referred device or element must have a specific orientation, be constructed and operated in a specific orientation, and therefore cannot be understood as limiting embodiments of the present application.

In the description of embodiments of the present application, unless otherwise clearly specified and limited, technical terms such as "mounting", "connecting", "coupling", and "fixing" should be understood in a broad sense, for example, it may be a fixed connection, a detachable connection, or integrated; it may also be a mechanical connection or an electrical connection; it may be directly connected or indirectly connected through an intermediary, and it may be the internal communication of two elements or the interaction relationship between two elements. For those of ordinary skill in the art, the specific meanings of the above terms in embodiments of the present application can be understood according to specific situations.

At present, from the development of the market situation, the application of power batteries is becoming more and more widespread. Power batteries are not only applied to energy storage power systems such as hydraulic, thermal, wind, and solar power stations, but also widely applied to electric transportation such as electric bicycles, electric motorcycles, and electric vehicles, as well as military equipment and aerospace fields. With the continuous expansion of the application fields of power batteries, their market demand is also continuously increasing.

The electrode assembly is an important component of the battery, and may be classified into a wound electrode assembly and a stacked electrode assembly according to the preparation method of the electrode assembly. The wound electrode assembly is widely used because it is relatively simple to operate and easy to control quality.

The wound electrode assembly generally includes a negative electrode sheet, a positive electrode sheet, and a separator arranged in a preset sequence. The thickness of the electrode sheet is generally greater than the thickness of the separator, and the electrode sheet is typically provided with tabs, with multiple tabs often provided on the same electrode sheet. That is, multiple positive tabs are generally provided on the positive electrode sheet, and multiple negative tabs are generally provided on the negative electrode sheet. Ideally, after the electrode sheet and the separator are wound and formed, all positive tabs should be aligned, and all negative tabs should be aligned. However, in actual production, especially in mass production, the thicknesses of various electrode sheets are often not completely consistent, and the thickness of the same electrode sheet may sometimes be uneven. This causes misalignment of the tab positions after the electrode sheet and the separator are wound for forming, leading to the production of defective products.

In order to improve the above problems, this embodiment of the present application provides a bump preparation device, which is provided with a bump preparation mechanism and a compacting mechanism that are sequentially arranged along the conveying direction of the first material. This device changes the bump preparation process in the related art in which preset bumps are directly prepared by the bump preparation mechanism. Instead, a two-step process is adopted: overpressed bumps with a height greater than the height of the preset bump are first prepared on the first material, and then pressure is applied to the overpressed bumps by the compacting mechanism to reduce the height of the bumps on the first material, so that the thickness of the first material reaches the preset value. In this way, even if the first material has an uneven thickness before passing through the bump preparation device, different regions of the first material that has passed through the bump preparation device can have substantially the same thickness. This can reduce the risk of production of defective products such as tab misalignment to a certain extent, thereby improving the consistency of different electrode assemblies produced and the winding yield of the electrode assemblies to a certain extent. Meanwhile, the bump preparation device provided in embodiments of the present application has high compatibility with the incoming thickness of electrode sheets, allowing electrode sheets of different thicknesses to be used in a mixed manner. This can eliminate or reduce the labor and plant space required for electrode sheet grading and matching to a certain extent, thereby improving the winding efficiency to a certain extent.

The bump preparation device disclosed in this embodiment of the present application may be used in winding equipment, a winding production line, or a winding method. The winding equipment generally includes a bump preparation device. In addition, the winding equipment may further include a winding needle located downstream of the bump preparation device, or other devices. The bump preparation device is configured to prepare bumps on a positive electrode sheet, a negative electrode sheet, or a combination of an electrode sheet and a separator, so as to uniformize the thickness of the electrode sheet, and the winding needle is configured to wind the electrode sheet and the separator for forming.

The winding production line generally includes the above winding equipment. In addition, the winding production line may further include a feeding mechanism or other devices disposed upstream of the bump preparation device. The feeding mechanism may include a first separator feeding mechanism, a first electrode sheet feeding mechanism, and a second separator feeding mechanism. The above expression of being disposed upstream of the bump preparation device means that during production, the relevant materials (such as the first separator, the first electrode sheet, and the second separator) first pass through the feeding mechanism and then through the bump preparation device.

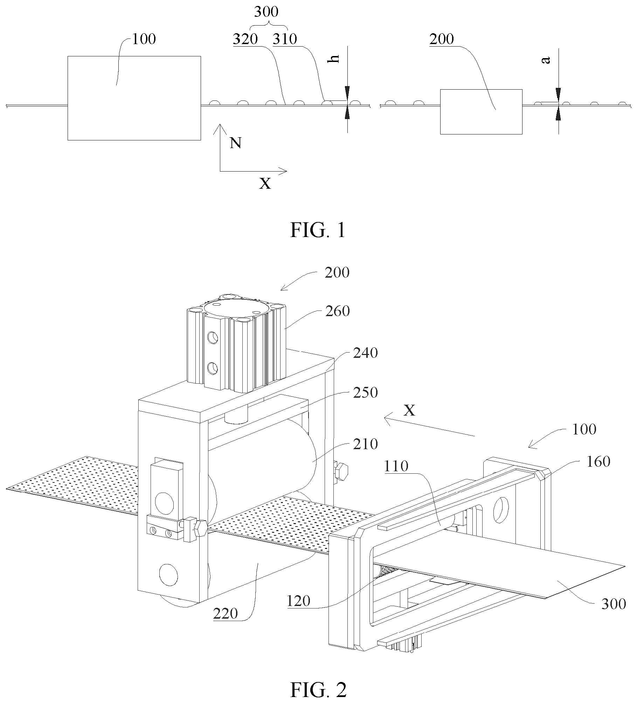

Referring to FIG. 1 to FIG. 3, an embodiment of the present application provides a bump preparation device. The bump preparation device includes a bump preparation mechanism 100 and a compacting mechanism 200 that are sequentially arranged along a conveying direction X of a first material 300, where the bump preparation mechanism 100 is configured to prepare overpressed bumps 310 on the first material 300, a height h of the overpressed bump 310 is greater than a height of a preset bump, and the preset bump is a bump required by the first material 300; and the compacting mechanism 200 is configured to apply, to the overpressed bumps 310, pressure toward a first surface 320 of the first material 300, such that a thickness a of the first material 300 reaches a preset value.

The bump preparation device provided in embodiments of the present application may be used for the preparation of electrode assemblies, and may also be used for the preparation of other materials. For ease of understanding, the operating principle thereof is described below by taking the bump preparation device used for the preparation of electrode assemblies as an example.

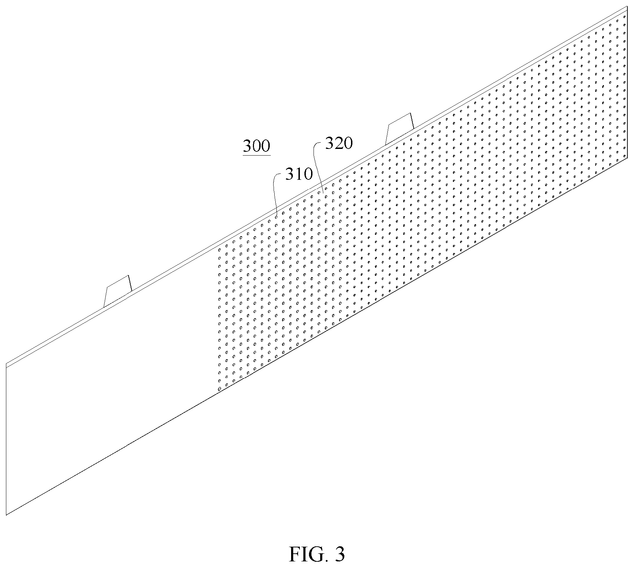

The first material 300 may be a single electrode sheet, such as a positive electrode sheet or a negative electrode sheet; or may be a combination of any electrode sheet and a separator, such as a positive electrode sheet and a separator that are laminated, or a negative electrode sheet and a separator that are laminated; or may be a positive electrode sheet, a separator, and a negative electrode sheet laminated; or may be a negative electrode sheet, a separator, a positive electrode sheet, and a separator that are laminated. Specifically, it may be determined according to usage requirements. The positive electrode sheet and the negative electrode sheet are each provided with tabs, as shown in FIG. 3. It can be understood that the first material 300 shown in FIG. 3 is in a state in which processing is not completed, and after processing of the first material 300 is completed, bumps are formed on the entire first surface 320.

The expression that the bump preparation mechanism 100 and the compacting mechanism 200 are sequentially arranged along a conveying direction X of a first material 300 means that, during processing of the first material 300, the first material 300 first passes through the bump preparation mechanism 100 and then through the compacting mechanism 200.

The bump preparation mechanism 100 may be composed of a single component or a combination of multiple components, such as a pressing plate or pressing block having a protruding portion, or may include two rotating rollers, with at least one rotating roller provided with a protruding portion. Other configurations may alternatively be adopted, as long as overpressed bumps 310 can be prepared on the first material 300.

It can be understood that the above overpressed bumps 310 are generally hemispherical protruding structures, and may alternatively be block-shaped protruding structures or other shaped bump structures, which may be specifically determined according to the manufacturing process.

The height h of the overpressed bump 310 refers to a dimension by which the overpressed bump 310 protrudes from the first surface 320 of the first material 300 along a normal direction N of the first surface 320 of the first material 300. The height of the preset bump refers to a dimension by which the preset bump protrudes from the first surface 320 of the first material 300 along the normal direction N of the first surface 320 of the first material 300. The first surface refers to a surface of the first material 300 from which the overpressed bump 310 protrudes. The preset bump refers to a bump that should be prepared on the first material 300 after the first material 300 passes through the entire bump preparation device according to processing requirements. It can be understood that each of the above height h of the overpressed bump 310 and the height of the preset bump may be a fixed value or a range value according to usage requirements. When either the height h of the overpressed bump 310 or the height of the preset bump is a range value, the height h of the overpressed bump 310 being greater than the height of the preset bump required by the first material 300 means that the minimum value of the height h of the overpressed bump 310 is greater than the maximum value of the height of the preset bump.

The compacting mechanism 200 may be composed of a single component or a combination of multiple components, such as a pressing plate or pressing block, or may include two rotating rollers. Other configurations may alternatively be adopted, as long as pressure toward the first surface 320 of the first material 300 can be applied to the overpressed bumps 310, such that the thickness a of the first material 300 reaches the preset value. The thickness a of the first material 300 refers to a vertical distance, along the normal direction N of the first surface 320 of the first material 300, between the highest point of the bump and the surface of the first surface of the first material 300 opposite to the highest point of the bump. The bump herein refers to a bump formed after the overpressed bump passes through the compacting mechanism. The preset value refers to a thickness value that the first material 300 should have after the first material 300 passes through the entire bump preparation device according to processing requirements. It can be understood that the above preset value may be a fixed value or a range value, and may be specifically determined according to usage requirements.

It can be understood that the pressure toward the first surface 320 of the first material 300 may be a force along the normal direction N of the first surface 320 of the first material 300, or may be a force forming an included angle with the normal direction N of the first surface 320 of the first material 300.

The usage process of the bump preparation device provided in embodiments of the present application is as follows:

The first material 300 in a flat state first passes through the station where the bump preparation mechanism 100 is located, and bump preparation is performed on the first material 300 by the bump preparation mechanism 100 to prepare the overpressed bumps 310. In this case, the thickness a of the first material 300 is greater than the preset value. Then, the first material 300 with the overpressed bumps 310 is conveyed to a station where the compacting mechanism 200 is located, and pressure toward the first surface 320 of the first material 300 is applied to the overpressed bumps 310 by the compacting mechanism 200, so as to reduce the height of the bumps on the first material 300 until the thickness a of the first material 300 is consistent with the preset value or falls within the range of the preset value.

The bump preparation device provided in embodiments of the present application is provided with the bump preparation mechanism 100 and the compacting mechanism 200 that are sequentially arranged along the conveying direction X of the first material 300. This device changes the bump preparation process in the related art in which preset bumps are directly prepared by the bump preparation mechanism 100. Instead, a two-step process is adopted: overpressed bumps 310 with a height greater than the height of the preset bump are first prepared on the first material 300, and then pressure is applied to the overpressed bumps 310 by the compacting mechanism 200 to reduce the height of the bumps on the first material 300, so that the thickness a of the first material 300 reaches the preset value. In this way, even if the first material 300 has an uneven thickness before passing through the bump preparation device, different regions of the first material that has passed through the bump preparation device can have substantially the same thickness. This can reduce the risk of production of defective products such as tab misalignment to a certain extent, thereby improving the consistency of different electrode assemblies produced and the winding yield of the electrode assemblies to a certain extent. Meanwhile, the bump preparation device provided in embodiments of the present application has high compatibility with the incoming thickness of electrode sheets, allowing electrode sheets of different thicknesses to be used in a mixed manner. This can eliminate or reduce the labor and plant space required for electrode sheet grading and matching to a certain extent, thereby improving the winding efficiency to a certain extent.

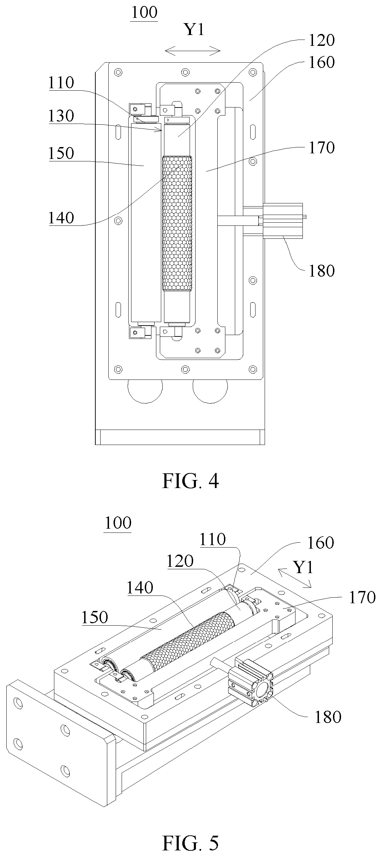

As shown in FIG. 4 and FIG. 5, in some embodiments, the bump preparation mechanism 100 includes a first roller body 110 and a second roller body 120 that are spaced apart from each other. A first gap 130 for the first material 300 to pass through is provided between the first roller body 110 and the second roller body 120. At least one of the first roller body 110 and the second roller body 120 is provided with a protruding portion 140.

The first roller body 110 may be provided in one or more according to usage requirements, and the second roller body 120 may also be provided with one or more according to usage requirements.

The first gap 130 is a gap between a rolling surface of the first roller body 110 and a rolling surface of the second roller body 120. The width of the first gap 130 may be substantially the same as the thickness a of the first material 300, or may be slightly less than the thickness a of the first material 300.

The arrangement that at least one of the first roller body 110 and the second roller body 120 is provided with a protruding portion 140 means that, the protruding portion 140 may be provided on the first roller body 110 without providing the protruding portion 140 on the second roller body 120; or the protruding portion 140 may be not provided on the first roller body 110 but provided on the second roller body 120; or the protruding portion 140 may be provided on each of the first roller body 110 and the second roller body 120.

With this structure provided in this embodiment, the bump preparation mechanism 100 is simple in structure and convenient for assembly and processing of the first material 300.

As shown in FIG. 4 and FIG. 5, in some embodiments, one of the first roller body 110 and the second roller body 120 is provided with a protruding portion 140, and a surface of the other roller body is provided with an elastic layer 150 in contact with the first material 300.

The solution provided in this embodiment includes two cases: in the first case, the protruding portion 140 is provided on the first roller body 110, and the surface of the second roller body 120 is provided with an elastic layer 150 in contact with the first material 300; and in the second case, the protruding portion 140 is provided on the second roller body 120, and the surface of the first roller body 110 is provided with an elastic layer 150 in contact with the first material 300.

The elastic layer 150 may adopt different materials and arrangement manners according to usage requirements, for example, an elastic sleeve sleeved on the corresponding roller body, such as a rubber sleeve or a composite material sleeve, or an elastic coating applied to the surface of the corresponding roller body, or other forms, which may be specifically determined according to usage requirements.

With this structure provided in this embodiment, the bump preparation mechanism 100 is simple in structure and convenient for assembly and processing of the first material 300.

In some embodiments, the first roller body 110 and the second roller body 120 are each provided with a protruding portion 140, and the protruding portion 140 on the first roller body 110 and the protruding portion 140 on the second roller body 120 are arranged in a staggered manner.

In this embodiment, the first roller body 110 and the second roller body 120 may be made of hard materials respectively, such as metal or non-metal, or may be made of materials with certain elasticity respectively, such as rubber or nylon.

The staggered arrangement means that the protruding portion 140 on the first roller body 110 and the protruding portion 140 on the second roller body 120 are arranged in a staggered manner, such that during processing, any region of the first material 300 can only be in contact with the protruding portion 140 on one of the roller bodies, but not in contact with the protruding portions 140 on both roller bodies at the same time, which facilitates the passage of the first material 300 through the first gap 130 and the preparation of the overpressed bumps 310.

As shown in FIG. 4 and FIG. 5, in some embodiments, the bump preparation mechanism 100 further includes a first support 160. One of the first roller body 110 and the second roller body 120 is fixedly mounted on the first support 160, and the other roller body is movably mounted on the first support 160 along a first direction Y1. The first direction Y1 is perpendicular to an axial direction of the fixedly mounted roller body.

The first support 160 may be made of one component according to usage requirements, or may be a combination of multiple components, which may be specifically determined according to usage requirements.

That one of the first roller body 110 and the second roller body 120 is fixedly mounted on the first support 160 and the other roller body is movably mounted on the first support 160 along the first direction Y1 includes the following two cases: in the first case, the first roller body 110 is fixedly mounted on the first support 160, and the second roller body 120 is movably mounted on the first support 160 along the first direction Y1 (that is, the direction perpendicular to the axial direction of the first roller body 110); and in the second case, the second roller body 120 is fixedly mounted on the first support 160, and the first roller body 110 is movably mounted on the first support 160 along the first direction Y1 (that is, the direction perpendicular to the axial direction of the second roller body 120).

The above fixedly mounted on the first support 160 means that after the corresponding roller body is mounted on the first support 160, the roller body only has the degree of freedom to rotate around its own axis, and has no degree of freedom to move relative to the first support 160 along the direction perpendicular to its own axis.

The solution provided in this embodiment enables the width of the first gap 130 to be adjustable. The width of the first gap 130 refers to a spacing between a rolling surface of the first roller body 110 and a rolling surface of the second roller body 120. This enables the bump preparation mechanism 100 to be applicable to bump preparation processes of first materials 300 of different thicknesses, thereby broadening the application scope of the bump preparation mechanism 100 to a certain extent.

In some embodiments, the bump preparation mechanism 100 further includes a first moving support 170. The first moving support 170 is movably mounted on the first support 160 along the first direction Y1. A movable roller body is fixedly mounted on the first moving support 170.

The first moving support 170 may be made of one component according to usage requirements, or may be a combination of multiple components, which may be specifically determined according to usage requirements.

The movable roller body being fixedly mounted on the first moving support 170 means that the above roller body movable relative to the first support 160 along the first direction Y1 is fixedly mounted on the first moving support 170, and the roller body only has the degree of freedom to rotate around its own axis relative to the first moving support 170, and has no degree of freedom to move relative to the first moving support 170 along the direction perpendicular to its own axis.

Compared with directly mounting the movable roller body on the first support 160, the solution provided in this embodiment makes the position adjustment of the movable roller body more convenient to operate.

In some embodiments, the bump preparation mechanism 100 further includes a first linear drive mechanism 180. The first linear drive mechanism 180 is mounted on the first support 160, and a drive end of the first linear drive mechanism 180 is connected to the first moving support 170 for driving the first moving support 170 to move.

The first linear drive mechanism 180 in this embodiment may adopt a cylinder, a hydraulic cylinder, or other linear drive mechanisms, and may be composed of one component or multiple components, which may be specifically determined according to usage requirements.

During use, the operation of the first linear drive mechanism 180 may be controlled to control the movement of the first moving support 170 relative to the first support 160, thereby adjusting the width of the first gap 130 between the first roller body 110 and the second roller body 120.

The solution provided in this embodiment further improves the automation level of the bump preparation mechanism 100, making the adjustment of the width of the first gap 130 more convenient and accurate.

In some embodiments, the first linear drive mechanism 180 includes a cylinder, a hydraulic cylinder, and/or a servo motor linear driver.

The solution provided in this embodiment includes but is not limited to the following cases: in the first case, the first linear drive mechanism 180 only includes a cylinder, where the number of cylinders may be one or more; in the second case, the first linear drive mechanism 180 only includes a hydraulic cylinder, where the number of hydraulic cylinders may be one or more; in the third case, the first linear drive mechanism 180 includes both a cylinder and a hydraulic cylinder, where the numbers of cylinders and hydraulic cylinders may be one or more respectively; in the fourth case, the first linear drive mechanism 180 only includes a servo motor linear driver, where the number of servo motor linear drivers may be one or more; in the fifth case, the first linear drive mechanism 180 includes both a cylinder and a servo motor linear driver, where the numbers of cylinders and servo motor linear drivers may be one or more respectively; in the sixth case, the first linear drive mechanism 180 includes both a hydraulic cylinder and a servo motor linear driver, where the numbers of hydraulic cylinders and servo motor linear drivers may be one or more respectively; and in the seventh case, the first linear drive mechanism 180 includes a cylinder, a hydraulic cylinder, and a servo motor linear driver, where the numbers of cylinders, hydraulic cylinders, and servo motor linear drivers may be one or more respectively.

With the solution provided in this embodiment, the first linear drive mechanism 180 is simple in structure and convenient for installation.

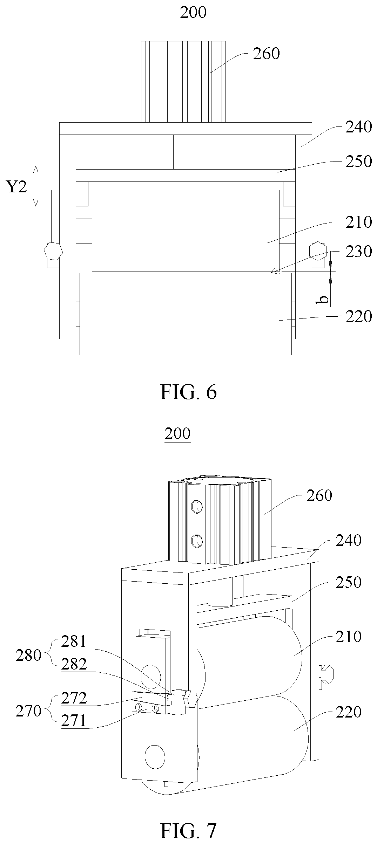

As shown in FIG. 6 and FIG. 7, in some embodiments, the compacting mechanism 200 includes a third roller body 210 and a fourth roller body 220 that are spaced apart from each other. A second gap 230 for the first material 300 to pass through is provided between the third roller body 210 and the fourth roller body 220. A width b of the second gap 230 is less than a thickness a of the first material 300 output by the compacting mechanism 200.

The third roller body 210 may be provided in one or more according to usage requirements, and the fourth roller body 220 may also be provided in one or more according to usage requirements.

The second gap 230 is a gap between a rolling surface of the third roller body 210 and a rolling surface of the fourth roller body 220. The width b of the second gap 230 refers to a distance between the rolling surface of the third roller body 210 and the rolling surface of the fourth roller body 220.

With this structure provided in this embodiment, the compacting mechanism 200 is simple in structure and convenient for assembly and processing of the first material 300.

In some embodiments, the compacting mechanism 200 further includes a second support 240. One of the third roller body 210 and the fourth roller body 220 is fixedly mounted on the second support 240, and the other roller body is movably mounted on the second support 240 along a second direction Y2. The second direction Y2 is perpendicular to an axial direction of the fixedly mounted roller body.

The second support 240 may be made of one component according to usage requirements, or may be a combination of multiple components, which may be specifically determined according to usage requirements.

That one of the third roller body 210 and the fourth roller body 220 is fixedly mounted on the second support 240 and the other roller body is movably mounted on the second support 240 along the second direction Y2 includes the following two cases: in the first case, the third roller body 210 is fixedly mounted on the second support 240, and the fourth roller body 220 is movably mounted on the second support 240 along the second direction Y2 (the direction perpendicular to the axial direction of the third roller body 210); and in the second case, the fourth roller body 220 is fixedly mounted on the second support 240, and the third roller body 210 is movably mounted on the second support 240 along the second direction Y2 (that is, the direction perpendicular to the axial direction of the fourth roller body 220).

The above fixedly mounted on the second support 240 means that after the corresponding roller body is mounted on the second support 240, the roller body only has the degree of freedom to rotate around its own axis, and has no degree of freedom to move relative to the second support 240 along the direction perpendicular to its own axis.

The solution provided in this embodiment enables the width b of the second gap 230 to be adjustable. This enables the compacting mechanism 200 to be applicable to processing requirements of first materials 300 of different thicknesses, thereby broadening the application scope of the compacting mechanism 200 to a certain extent.

In some embodiments, the compacting mechanism 200 further includes a second moving support 250. The second moving support 250 is movably mounted on the second support 240 along the second direction Y2. A movable roller body is fixedly mounted on the second moving support 250.

The second moving support 250 may be made of one component according to usage requirements, or may be a combination of multiple components, which may be specifically determined according to usage requirements.

The movable roller body being fixedly mounted on the second moving support 250 means that the above roller body movable relative to the second support 240 along the second direction Y2 is mounted on the second moving support 250, and the roller body only has the degree of freedom to rotate around its own axis relative to the second moving support 250, and has no degree of freedom to move relative to the second moving support 250 along the direction perpendicular to its own axis.

Compared with directly mounting the movable roller body on the second support 240, the solution provided in this embodiment makes the position adjustment of the movable roller body more convenient to operate.

In some embodiments, the compacting mechanism 200 further includes a second linear drive mechanism 260. The second linear drive mechanism 260 is mounted on the second support 240, and a drive end of the second linear drive mechanism 260 is connected to the second moving support 250 for driving the second moving support 250 to move.

The second linear drive mechanism 260 in this embodiment may adopt a cylinder, a hydraulic cylinder, or other linear drive mechanisms, and may be composed of one component or multiple components, which may be specifically determined according to usage requirements.

During use, the operation of the second linear drive mechanism 260 may be controlled to control the movement of the second moving support 250 relative to the second support 240, thereby adjusting the width of the first gap 130 between the third roller body 210 and the fourth roller body 220.

The solution provided in this embodiment further improves the automation level of the compacting mechanism 200, making the adjustment of the width of the first gap 130 more convenient and accurate.

In some embodiments, the second linear drive mechanism 260 includes a cylinder, a hydraulic cylinder, and/or a servo motor linear driver.

The solution provided in this embodiment includes but is not limited to the following cases: in the first case, the second linear drive mechanism 260 only includes a cylinder, where the number of cylinders may be one or more; in the second case, the second linear drive mechanism 260 only includes a hydraulic cylinder, where the number of hydraulic cylinders may be one or more; in the third case, the second linear drive mechanism 260 includes both a cylinder and a hydraulic cylinder, where the numbers of cylinders and hydraulic cylinders may be one or more respectively; in the fourth case, the second linear drive mechanism 260 only includes a servo motor linear driver, where the number of servo motor linear drivers may be one or more; in the fifth case, the second linear drive mechanism 260 includes both a cylinder and a servo motor linear driver, where the numbers of cylinders and servo motor linear drivers may be one or more respectively; in the sixth case, the second linear drive mechanism 260 includes both a hydraulic cylinder and a servo motor linear driver, where the numbers of hydraulic cylinders and servo motor linear drivers may be one or more respectively; and in the seventh case, the second linear drive mechanism 260 includes a cylinder, a hydraulic cylinder, and a servo motor linear driver, where the numbers of cylinders, hydraulic cylinders, and servo motor linear drivers may be one or more respectively.

With the solution provided in this embodiment, the second linear drive mechanism 260 is simple in structure and convenient for installation.

As shown in FIG. 7, in some embodiments, the compacting mechanism 200 further includes a fixing structure 270. The fixing structure 270 is configured to secure a position of the movable roller body after the movable roller body moves into place.

The fixing structure 270 may adopt multiple arrangement manners, such as including a bolt threadedly coupled to the second support 240, or including a fixing block magnetically attached to the second support 240, or other structures and arrangement manners, as long as the fixing structure 270 may secure the position of the movable roller body after the movable roller body moves into place.

The solution provided in this embodiment can secure the relative position of the movable roller body with respect to the second support 240 and the fixedly mounted roller body after the movable roller body moves into place, thereby ensuring the processing operation of the compacting mechanism 200 to proceed stably.

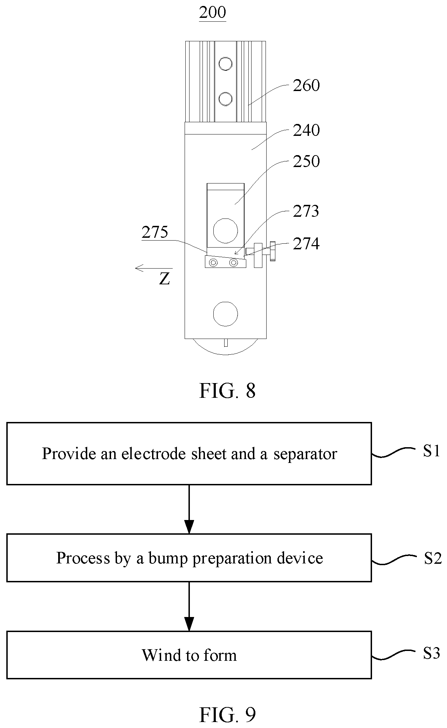

As shown in FIG. 7 and FIG. 8, in some embodiments, the fixing structure 270 includes a first support portion 271 and a second support portion 272. The first support portion 271 is fixedly mounted on the second support 240 and located on a side of the second moving support 250 away from the second linear drive mechanism 260. The first support portion 271 is spaced apart from the second moving support 250 with a third gap 273 therebetween.

The second support portion 272 is configured to: be mounted into the third gap 273 after the movable roller body moves into place, and abut against the second moving support 250 and the first support portion 271.

The first support portion 271 may be composed of one component or multiple components, and may be integrally formed on the second support 240 or be an independently arranged member, which may be specifically determined according to usage requirements.

The second support portion 272 may be composed of one component or multiple components, and may be movably mounted on the first support portion 271 or be an independently arranged member, which may be specifically determined according to usage requirements. The shape and size of the second support portion 272 may be the same as or different from the shape and size of the third gap 273 respectively. It can be understood that when the shape and size of the second support portion 272 are the same as the shape and size of the third gap 273 respectively, after the second support portion 272 is mounted into the third gap 273, it can completely fill the third gap 273. When at least one parameter of the shape and size of the second support portion 272 is different from the corresponding parameter of the third gap 273, after the second support portion 272 is mounted into the third gap 273, it only fills part of the space of the third gap 273. In any manner, as long as after the second support portion 272 is mounted into the third gap 273, it can support the second moving support 250 to cooperate with the second linear drive mechanism 260 to define the position of the second moving support 250.

With the structure provided in this embodiment, the fixing structure 270 is simple in structure and convenient for preparation and installation.

In some embodiments, as shown in FIG. 8, along a third direction Z, the third gap 273 has a first end 274 and a second end 275 oppositely arranged, and a width of the third gap 273 gradually decreases from the first end 274 toward the second end 275. The width of the third gap 273 refers to a spacing between a surface of the second moving support 250 facing the first support portion 271 and a surface of the first support portion 271 facing the second moving support 250.

The second support portion 272 is configured to be inserted into the third gap 273 from the first end 274. And along the third direction, a cross-sectional area of the second support portion 272 gradually increases from an insertion end toward the other end. The cross-section of the second support portion 272 refers to the section obtained by cutting the second support portion 272 with a plane perpendicular to the third direction.

The solution provided in this embodiment facilitates the installation of the second support portion 272 and can improve the production efficiency to a certain extent.

In some embodiments, a surface of the second moving support 250 opposite to the first support portion 271 is a horizontally arranged flat surface. A surface of the first support portion 271 opposite to the second moving support 250 is an inclined surface. A surface of the second support portion 272 in contact with the second moving support 250 is a horizontally arranged flat surface, and a surface in contact with the first support portion 271 is an inclined surface.

The horizontally arranged flat surface refers to the plane being arranged parallel to a horizontal plane. The inclined surface refers to the surface being arranged at a non-zero angle or a non-90 degree angle with the horizontally arranged flat surface.

The solution provided in this embodiment enables the second support portion 272 to be in surface contact with the first support portion 271 and the second moving support 250, thereby providing a large friction force between the second support portion 272 and the second moving support 250 as well as the first support portion 271 after installation, and further achieving stable support for the second moving support 250.

In some embodiments, the second support portion 272 is a wedge block. With the solution provided in this embodiment, the structure of the second support portion 272 is simple and stable, and convenient for preparation and operation.

In some embodiments, as shown in FIG. 7, the compacting mechanism 200 further includes an adjustment assembly 280. The adjustment assembly 280 is mounted on the second support 240. A drive end of the adjustment assembly 280 is connected to the second support portion 272 for driving the second support portion 272 to be inserted into the third gap 273.

The adjustment assembly 280 may be composed of one piece or multiple parts, which may be specifically determined according to usage requirements. For example, the adjustment assembly 280 may adopt a sliding member slidably arranged on the second support 240, a threaded member threadedly coupled to the second support 240, and the like, as long as the second support portion 272 may be pushed by the adjustment assembly 280 to be inserted into the third gap 273.

The arrangement of the adjustment assembly 280 facilitates the insertion of the second support portion 272 into the third gap 273 and can improve the processing efficiency of the first material 300 to a certain extent.

In some embodiments, as shown in FIG. 7, the adjustment assembly 280 includes a first adjustment portion 281 and a second adjustment portion 282. The first adjustment portion 281 is fixedly mounted on the second support 240. The second adjustment portion 282 is threadedly coupled to the first adjustment portion 281, and the second adjustment portion 282 abuts against the second support portion 272.

The first adjustment portion 281 may be composed of one component or multiple components, and may be integrally formed on the second support 240 or be an independently arranged member, which may be specifically determined according to usage requirements.

The second adjustment portion 282 may adopt a bolt, a screw, or other member having a threaded structure threadedly coupled to the first adjustment portion 281, which may be specifically determined according to usage requirements.

During use, when the second support portion 272 needs to be inserted into the third gap 273, a part of the second support portion 272 may be inserted into the third gap 273 first, and an end of the second support portion 272 not inserted into the third gap 273 is made to abut against the second adjustment portion 282, and then the second adjustment portion 282 is rotated to push the second support portion 272 to gradually enter the third gap 273 until the second support portion 272 abuts against the first support portion 271 and the second moving support 250 respectively and cannot be pushed further into the third gap 273.

With the structure provided in this embodiment, the adjustment assembly 280 is simple in structure and convenient for operation.

In some embodiments, the first adjustment portion 281 includes a protrusion protruding from the second support 240. A threaded hole is provided on the protrusion. The second adjustment portion 282 includes a bolt threadedly coupled to the threaded hole.

The protrusion in this embodiment may be integrally formed on the second support 240, or may be mounted on the second support 240 by threaded connection, insertion, or other manners, which may be specifically determined according to usage requirements.

With the solution provided in this embodiment, the first adjustment portion 281 and the second adjustment portion 282 are each simple in structure, and convenient for installation and operation.

According to some embodiments of the present application, the present application further provides a battery production system, including the bump preparation device according to any one of the above solutions.

The battery production system generally further includes winding equipment. The battery production system provided in embodiments of the present application adds a set of bump preparation mechanism and compacting mechanism before winding equipment, such that different regions of the first material that has passed through the bump preparation device have substantially the same thickness. This can reduce the risk of production of defective products such as tab misalignment to a certain extent, thereby improving the consistency of different electrode assemblies produced and the winding yield of the electrode assemblies to a certain extent. Meanwhile, the battery production system provided in embodiments of the present application has high compatibility with the incoming thickness of electrode sheets, allowing electrode sheets of different thicknesses to be used in a mixed manner. This can eliminate or reduce the labor and plant space required for electrode sheet grading and matching to a certain extent, thereby improving the winding efficiency to a certain extent.

According to some embodiments of the present application, the present application further provides a winding method. As shown in FIG. 9, the winding method includes the following steps:
S1. Provide an electrode sheet and a separator.

S2. Process by the bump preparation device according to any one of the above embodiments.

S3. Wind to form.

With the winding method provided in embodiments of the present application, different regions of the first material produced can have substantially the same thickness. This can reduce the risk of production of defective products such as tab misalignment to a certain extent, thereby improving the consistency of different electrode assemblies produced and the winding yield of the electrode assemblies to a certain extent. Meanwhile, the winding method has high compatibility with the incoming thickness of electrode sheets, allowing electrode sheets of different thicknesses to be used in a mixed manner. This can eliminate or reduce the labor and plant space required for electrode sheet grading and matching to a certain extent, thereby improving the winding efficiency to a certain extent.

According to some embodiments of the present application, a bump preparation device is provided. As shown in FIG. 1 to FIG. 8, the bump preparation device includes a bump preparation mechanism 100 and a compacting mechanism 200 that are sequentially arranged along a conveying direction X of a first material 300, where the bump preparation mechanism 100 is configured to prepare overpressed bumps 310 on the first material 300, a height h of the overpressed bump 310 is greater than a height of a preset bump, the preset bump is a bump required by the first material 300 and the compacting mechanism 200 is configured to apply, to the overpressed bumps 310, pressure toward a first surface 320 of the first material 300, such that a thickness a of the first material 300 reaches a preset value.

The bump preparation mechanism 100 includes a first roller body 110 and a second roller body 120 that are spaced apart from each other. A first gap 130 for the first material 300 to pass through is provided between the first roller body 110 and the second roller body 120. At least one of the first roller body 110 and the second roller body 120 is provided with a protruding portion 140. In some embodiments, one of the first roller body 110 and the second roller body 120 is provided with a protruding portion 140, and a surface of the other roller body is provided with an elastic layer 150 in contact with the first material 300. In some other embodiments, the first roller body 110 and the second roller body 120 are each provided with a protruding portion 140, and the protruding portions 140 on the first roller body 110 and the second roller body 120 are arranged in a staggered manner.

The bump preparation mechanism 100 further includes a first support 160. One of the first roller body 110 and the second roller body 120 is fixedly mounted on the first support 160, and the other roller body is movably mounted on the first support 160 along a first direction Y1. The bump preparation mechanism 100 further includes a first moving support 170. The first moving support 170 is movably mounted on the first support 160 along the first direction Y1, and the movable roller body is mounted on the first moving support 170.

The bump preparation mechanism 100 further includes a first linear drive mechanism 180. The first linear drive mechanism 180 is mounted on the first support 160, and a drive end of the first linear drive mechanism 180 is connected to the first moving support 170 for driving the first moving support 170 to move. The first linear drive mechanism 180 includes a cylinder, a hydraulic cylinder, and/or a servo motor linear driver, and the like.

The compacting mechanism 200 includes a third roller body 210 and a fourth roller body 220 that are spaced apart from each other. A second gap 230 for the first material 300 to pass through is provided between the third roller body 210 and the fourth roller body 220. A width b of the second gap 230 is less than a thickness a of the first material 300 output by the bump preparation mechanism 100.

The compacting mechanism 200 further includes a second support 240. One of the third roller body 210 and the fourth roller body 220 is fixedly mounted on the second support 240, and the other roller body is movably mounted on the second support 240 along a second direction Y2.

The compacting mechanism 200 further includes a second moving support 250. The second moving support 250 is movably mounted on the second support 240 along the second direction Y2, and the movable roller body is rotatably mounted on the second moving support 250.

The compacting mechanism 200 further includes a second linear drive mechanism 260. The second linear drive mechanism 260 is mounted on the second support 240, and a drive end of the second linear drive mechanism 260 is connected to the second moving support 250 for driving the second moving support 250 to move. The second linear drive mechanism 260 includes a cylinder, a hydraulic cylinder, and/or a servo motor linear driver, and the like.

The compacting mechanism 200 further includes a fixing structure 270. The fixing structure 270 is configured to secure a position of the movable roller body after the movable roller body moves into place. The fixing structure 270 includes a first support portion 271 and a second support portion 272. The first support portion 271 is fixedly mounted on the second support 240 and located on a side of the second moving support 250 away from the second linear drive mechanism 260. The first support portion 271 is spaced apart from the second moving support 250 with a third gap 273 therebetween. The second support portion 272 is configured to: be mounted into the third gap 273 after the movable roller body moves into place, and abut against the second moving support 250 and the first support portion 271.

Along a third direction Z, the third gap 273 has a first end 274 and a second end 275 oppositely arranged, and a width of the third gap 273 gradually decreases from the first end 274 toward the second end 275. The second support portion 272 is configured to be inserted into the third gap 273 from the first end 274; and along the third direction, a cross-sectional area of the second support portion 272 gradually increases from an insertion end toward the other end.

A surface of the second moving support 250 opposite to the first support portion 271 is a flat surface, and a surface of the first support portion 271 opposite to the second moving support 250 is an inclined surface. A surface of the second support portion 272 in contact with the second moving support 250 is a flat surface, and a surface in contact with the first support portion 271 is an inclined surface. The second support portion 272 is a wedge block.

The compacting mechanism 200 further includes an adjustment assembly 280. The adjustment assembly 280 is mounted on the second support 240, and a drive end of the adjustment assembly 280 is connected to the second support portion 272 for driving the second support portion 272 to be inserted into the third gap 273.

The adjustment assembly 280 includes a first adjustment portion 281 and a second adjustment portion 282. The first adjustment portion 281 is fixedly mounted on the second support 240, the second adjustment portion 282 is threadedly coupled to the first adjustment portion 281, and the second adjustment portion 282 abuts against the second support portion 272. The first adjustment portion 281 includes a protrusion protruding from the second support 240, a threaded hole is provided on the protrusion, and the second adjustment portion 282 includes a bolt threadedly coupled to the threaded hole.

The roller materials used for the first roller body 110, the second roller body 120, the third roller body 210, and the fourth roller body 220 may be metal, rubber, nylon, non-metal, or the like.

The bump preparation device provided in this embodiment may be applied to cathode electrode sheets and anode electrode sheets, and may also be applied to electrode sheet and separator combinations after the width of the first gap and the width of the second gap are adjusted. During use, by increasing the pressure of the first linear drive mechanism in the bump preparation mechanism, a series of regularly arranged overpressed bumps can be generated on the first material after the first material passes through the bump preparation mechanism. After excessive bump preparation, the first material passes through the compacting mechanism, and the rolling pressure squeezes the overpressed bumps back into the interior of the first material, forming a first material with consistent thickness and meeting process requirements. The first material after compaction has consistent thickness, which can prevent the electrode assembly wound from having tab misalignment.

The bump preparation device provided in this embodiment has extremely high compatibility with the thickness of electrode sheets of an incoming material, and electrode sheets with stable thickness can be formed after the material passes through the mechanism.

Finally, it should be noted that: the above embodiments are only used to illustrate the technical solution of the present application and are not intended to limit it; although the present application has been described in detail with reference to the foregoing embodiments, those of ordinary skill in the art should understand that: modifications can still be made to the technical solutions recorded in the foregoing embodiments, or equivalent replacements can be made to some or all of the technical features therein; these modifications or replacements do not make the essence of the corresponding technical solutions depart from the scope of the technical solutions of embodiments of the present application, and they should all be covered within the scope of the claims and specification of the present application. In particular, as long as there is no structural conflict, the various technical features mentioned in the various embodiments can be combined in any manner. The present application is not limited to the specific embodiments disclosed in the text, but includes all technical solutions falling within the scope of the claims.

## Claims

1. A bump preparation device, **characterized by** comprising a bump preparation mechanism and a compacting mechanism that are sequentially arranged along a conveying direction of a first material, wherein the bump preparation mechanism is configured to prepare overpressed bumps on the first material, a height of the overpressed bump is greater than a height of a preset bump, the preset bump is a bump required by the first material, and the compacting mechanism is configured to apply, to the overpressed bumps, pressure toward a main body portion of the first material, such that a thickness of the first material reaches a preset value.

2. The bump preparation device according to claim 1, **characterized in that** the bump preparation mechanism comprises a first roller body and a second roller body that are spaced apart from each other, wherein a first gap for the first material to pass through is provided between the first roller body and the second roller body, and at least one of the first roller body and the second roller body is provided with a protruding portion.

3. The bump preparation device according to claim 2, **characterized in that** one of the first roller body and the second roller body is provided with a protruding portion, and a surface of the other roller body is provided with an elastic layer in contact with the first material.

4. The bump preparation device according to claim 2, **characterized in that** the first roller body and the second roller body are each provided with a protruding portion, and the protruding portion on the first roller body and the protruding portion on the second roller body are arranged in a staggered manner.

5. The bump preparation device according to any one of claims 2 to 4, **characterized in that** the bump preparation mechanism further comprises a first support, wherein one of the first roller body and the second roller body is fixedly mounted on the first support, the other roller body is movably mounted on the first support along a first direction, and the first direction is perpendicular to an axial direction of the fixedly mounted roller body.

6. The bump preparation device according to claim 5, **characterized in that** the bump preparation mechanism further comprises a first moving support, wherein the first moving support is movably mounted on the first support along the first direction, and a movable roller body is fixedly mounted on the first moving support.

7. The bump preparation device according to claim 6, **characterized in that** the bump preparation mechanism further comprises a first linear drive mechanism, wherein the first linear drive mechanism is mounted on the first support, and a drive end of the first linear drive mechanism is connected to the first moving support for driving the first moving support to move.

8. The bump preparation device according to any one of claims 1 to 7, **characterized in that** the compacting mechanism comprises a third roller body and a fourth roller body that are spaced apart from each other, wherein a second gap for the first material to pass through is provided between the third roller body and the fourth roller body, and a width of the second gap is less than a thickness of the first material output by the bump preparation mechanism.

9. The bump preparation device according to claim 8, **characterized in that** the compacting mechanism further comprises a second support, wherein one of the third roller body and the fourth roller body is fixedly mounted on the second support, the other roller body is movably mounted on the second support along a second direction, and the second direction is perpendicular to an axial direction of the fixedly mounted roller body.

10. The bump preparation device according to claim 9, **characterized in that** the compacting mechanism further comprises a second moving support, wherein the second moving support is movably mounted on the second support along the second direction, and the movable roller body is fixedly mounted on the second moving support.

11. The bump preparation device according to claim 10, **characterized in that** the compacting mechanism further comprises a second linear drive mechanism, wherein the second linear drive mechanism is mounted on the second support, and a drive end of the second linear drive mechanism is connected to the second moving support for driving the second moving support to move.

12. The bump preparation device according to claim 11, **characterized in that** the compacting mechanism further comprises a fixing structure, wherein the fixing structure is configured to secure a position of the movable roller body after the movable roller body moves into place.

13. The bump preparation device according to claim 12, **characterized in that** the fixing structure comprises a first support portion and a second support portion, wherein the first support portion is fixedly mounted on the second support and located on a side of the second moving support away from the second linear drive mechanism, and the first support portion is spaced apart from the second moving support with a third gap therebetween; and
the second support portion is configured to: be mounted into the third gap after the movable roller body moves into place, and abut against the second moving support and the first support portion.

14. The bump preparation device according to claim 13, **characterized in that**, along a third direction, the third gap has a first end and a second end oppositely arranged, and a width of the third gap gradually decreases from the first end toward the second end; and
the second support portion is configured to be inserted into the third gap from the first end; and along the third direction, a cross-sectional area of the second support portion gradually increases from an insertion end toward the other end.

15. The bump preparation device according to claim 13, **characterized in that** a surface of the second moving support opposite to the first support portion is a horizontally arranged flat surface, a surface of the first support portion opposite to the second moving support is an inclined surface, a surface that is of the second support portion and that is in contact with the second moving support is a horizontally arranged flat surface, and a surface in contact with the first support portion is an inclined surface.

16. The bump preparation device according to claim 15, **characterized in that** the second support portion is a wedge block.

17. The bump preparation device according to any one of claims 13 to 16, **characterized in that** the compacting mechanism further comprises an adjustment assembly, wherein the adjustment assembly is mounted on the second support, and a drive end of the adjustment assembly is connected to the second support portion for driving the second support portion to be inserted into the third gap.

18. The bump preparation device according to claim 17, **characterized in that** the adjustment assembly comprises a first adjustment portion and a second adjustment portion, wherein the first adjustment portion is fixedly mounted on the second support, the second adjustment portion is threadedly coupled to the first adjustment portion, and the second adjustment portion abuts against the second support portion.

19. The bump preparation device according to claim 18, **characterized in that** the first adjustment portion comprises a protrusion protruding from the second support, wherein a threaded hole is provided on the protrusion, and the second adjustment portion comprises a bolt threadedly coupled to the threaded hole.

20. A battery production system, **characterized by** comprising the bump preparation device according to any one of claims 1 to 19.

21. A winding method, **characterized by** comprising:
providing an electrode sheet and a separator;
processing by the bump preparation device according to any one of claims 1 to 19; and
winding to form.
